# EUROPÄISCHE PATENTSCHRIFT

(11) **EP 0 290 051 B1**
(45) Veröffentlichungstag und Bekanntmachung des Hinweises auf die Patenterteilung: **25.08.1993**
(21) Anmeldenummer: 88107385.2
(22) Anmeldetag: 07.05.1988
(51) Int. Cl.: C23C 4/18, C23C 4/06, C23C 24/10

(54) **Verfahren zum Herstellen einer selbstschärfenden Schneid- oder Messerkante**
Process for manufacturing a self-sharpening cutting or knife edge
Procédé de fabrication d'une lame autoaiguisante

(30) Priorität: 08.05.1987 DE 3715326
(43) Veröffentlichungstag der Anmeldung: 09.11.1988
(73) Patentinhaber: Castolin S.A., CH-1001 Lausanne-St. Sulpice (CH)
(72) Erfinder: Simm, Wolfgang, Dr., CH-1024 Ecublens (CH); Steine, Hans-Theo, CH-1022 Chavannes (CH)
(74) Vertreter: Hiebsch, Gerhard F., Dipl.-Ing.

(56) Entgegenhaltungen:
- EP-A- 0 290 052
- DE-A- 3 635 751
- FR-A- 2 209 854
- US-A- 4 299 860
- ENGINEERS DIGEST, Band 40, Nr. 2, Februar 1979, Seite 21, London, GB; "Laser-fusing of flame-sprayed self-fluxing alloy coatings"
- CHEMICAL ABSTRACTS, Band 104, Nr. 2, Januar 1986, Seite 239, Zusammenfassung Nr. 9512s, Columbus, Ohio, US; & JP-A-60 110851 (Agency of Industrial Sciences and Technology) 17-06-1985
- CHEMICAL ABSTRACTS, Band 101, Nr. 22, November 1984, Seite 239, Zusammenfassung Nr. 196009f, Columbus, Ohio, US; J. ZHU et al.: "Structure of surface coating of eutectic alloys on 0.45% carbon-steel by laser-melting"; & NETSU SHORI 1983, 23(6), 342-8
- CHEMICAL ABSTRACTS, Band 101, Nr. 18, Oktober 1984, Seite 245, Zusammenfassung Nr. 156016z, Columbus, Ohio, US; W. AMENDE: "Remelting and alloying using laser beams: experiences and applications"; & VDI-BER. 1984, 535, 205-1414
- JOURNAL OF VACUUM SCIENCE & TECHNOLOGY A, Band 4, Nr. 6, "Second-Series", November/Dezember 1986, Seiten 2740-2746, Woodbury, NY, US; R.N. JOHNSON et al.: "Advances in the electrospark deposition coating process"

## Beschreibung

Die Erfindung betrifft ein Verfahren zum Herstellen einer selbstschärfenden Schneid- oder Messerkante durch Beschichten eines metallischen Grundwerkstoffes.

Selbstschärfende Schneid- oder Messerkanten sind bekannt. Sie werden üblicherweise durch Oberflächenbehandlung -- beispielsweise Einsatzhärten oder Nitrieren -- eines Stahles hergestellt. Auch die Verwendung von Oberflächenbeschichtungsverfahren wurde getestet - allerdings nur mit geringem Erfolg, da schon die kleinsten Fehler wie Poren- oder Oxideinschlüsse -- die bei den bekannten Verfahren nicht zu vermeiden sind -- zu Ausbrüchen bzw. zur Zerstörung der Schneidkante führen. Bei den Oberflächenhärteverfahren sind durch die Begrenzung der Schichtstärke der Härtezone vom max. 0,5 mm die Anwendungsmöglichkeiten sehr eingeengt.

Die FR-A-2 209 854 beschreibt ein Verfahren zum Herstellen von Schneidwerkzeugen, bei dem eine Hartlegierungschicht, z.B. aus einer WC enthaltenden Nickel-Kobalt Matrix, auf einen Grundwerkstoff, z.B. durch thermisches Spritzverfahren, aufgebracht und dann mit einem Hochenergiestrahl zu einer dichten und porenfreien Schicht eingeschmolzen wird.

In Kenntnis dieses Standes der Technik hat sich der Erfinder das Ziel gesetzt, das eingangs erwähnte Verfahren so zu verbessern, daß auf einfache Weise haltbare Schneid- oder Messerkanten variierbarer Schichtdicke hergestellt werden vermögen.

Zur Lösung dieser Aufgabe führt die Lehre nach Patentanspruch 1; zu weiteren Merkmalen des erfindungsgemäßen Verfahrens wird auf die Unteransprüche verwiesen.

Der metallische Grundwerkstoff wird mit einer Hartlegierungsschicht von mehr als 0,5 mm Dicke beschichtet, die nach dem Aufbringen auf den Grundwerkstoff mittels eines Hochenergiestrahles eingeschmolzen und dessen Eindringtiefe so gewählt wird, daß die Überlappung der Schmelzzone mehr als 20 % der Schichtdicke beträgt. Um den Vorgang des Selbstschärfens ausnützen zu können, ist es erforderlich, die Härte des Grundwerkstoffes wesentlich niedriger zu halten als die der aufgebrachten Schicht, hierdurch wird der Grundwerkstoff schneller abgenützt als jene Schicht. Dieser Vorgang garantiert eine sich nachschärfende Schneidkante über die gesamte Schichtbreite und eine absolut dichte und porenfreie Schicht. Besonders deutlich ist dies bei bevorzugten Schichtwerkstoffen in Form einer Nickel-, einer Kobalt- oder einer Eisenhartlegierung, vor allem bei Schnittwerkstoffen aus Ni Cr B Si-Legierung oder Co Cr W C-Legierungen, die dann vorteilhafterweise einen Hartstoffanteil von 5 - 95 % aufweisen, gegebenenfalls werden etwa 50 Gew.-% an Wolframschmelzkarbid zugesetzt. Auch hat es sich als günstig erwiesen, in den Schichtwerkstoffen auf der Basis eines oder mehrerer Elemente der Gruppe 8, Periode 4, des Periodensystems Hartstoffe wie Karbide, Boride, Silicide und/oder Nitride einzulagern.

Nach weiteren Merkmalen der Erfindung liegt der Hartstoffanteil im Bezug auf die Matrixhartlegierung zwischen 5 und 95 Gew.-%, wobei gegebenenfalls die Korngröße der eingelagerten Hartstoffe unter 200 µm, vorzugsweise unter 150 µm.

Als vorteilhaftes Schichtdickenmaß haben sich maximal 2,0 mm, insbesondere 1,0 mm bzw. 0,5 mm herausgestellt.

Im Rahmen der Erfindung kann der Schichtwerkstoff durch ein thermisches Spritzverfahren oder aber als Paste aufgebracht werden, die zumindest aus der Hartlegierung und einem Binder besteht, wobei in letzterem Falle als Binder für den Schichtwerkstoff ein aushärtbarer Harzbinder eingesetzt und vor der Nachbehandlung mit dem Hochenergiestrahl ausgehärtet werden kann.

Es ist aber auch möglich, den Schichtwerkstoff als Pulver mit einer Pulverfördereinrichtung direkt in den Hochenergiestrahl einzubringen.

Der Grundwerkstoff besteht bevorzugt aus einer Eisen-Basislegierung, wobei gegebenenfalls eine aushärtbare Eisen-Basislegierung vorgesehen ist, die insbesondere korrosionsbeständig ist. Jedoch eignet sich auch ein Grundwerkstoff aus einer korrosionsbeständigen Nickel-Basislegierung.

Von erfinderischer Bedeutung ist eine in den Grundwerkstoff eingefügte Aussparung in welche die Schicht eingebracht wird.

Zum Einschmelzen und Verdichten des aufgebrachten Schichtwerkstoffes kann erfindungsgemäß ein Laserstrahl verwendet werden, und die Eindringtiefe des Hochenergiestrahles ist größer als die Dicke der aufgebrachten Schicht, wobei eine Überlappung der Schmelzzone von etwa 20 bis 60 % entstehen kann.

Weitere Vorteile, Merkmale und Einzelheiten des erfindungsgemäßen Verfahrens sind den nachfolgend beschriebenen Beispielen zu entnehmen.

### Beispiel 1

Ein Messersatz für eine Hobelmaschine sollte mit einer 20 mm breiten selbstschärfenden Schneidkante versehen werden.

Der Messerrohling, bestehend aus einem Stahl CK 50, wurde auf der Seite der Schneidkante auf eine Breite von 20 mm über die gesamte Länge von 400 mm und eine Tiefe von 1,0 mm ausgefräst. Die Gesamtdicke des Rohlings betrug 5 mm.

Nach dem Bearbeiten wurde eine Aussparung durch Strahlen mit Korund vorbereitet sowie anschließend mit einem autogenen Flammspritzbrenner ein Gemisch aus einer Ni Cr B Si-Legierung mit 50-Gew.-% Wolframschmelz-Karbid in der Aussparung 1,3 mm dick aufgespritzt. Die aufgespritze Schicht wurde dann mit einem Laserstrahl eines Strahldurchmessers von 2 mm und einer Leistung von 1,5 kW eingeschmolzen. Die Vorschubgeschwindigkeit betrug 16,8 m/h, die Ueberlappung der Schmelzzone 25 %.

Nach dem Einschmelzen wurde der Messerrohling auf beiden Seiten geschliffen, so daß die eingebrachte Schicht 0,8 mm maß. Die Seite der Schneidkante wurde in einem Winkel von etwa 60° angeschrägt, so daß diese an der Kante nur aus Hartlegierung besteht.

Beim Einsatz der hergestellten Hobelmesser konnte ohne Unterbrechung für ein Nachschleifen gearbeitet werden, wodurch im Vergleich zu einsatzgehärteten Hobelmessern eine achtfach längere Arbeitszeit erreicht werden konnte.

### Beispiel 2

Ein Schlagmesser zum Schneiden von Kartonbögen mit einer Länge von 1.000 mm, einer Breite von 60 mm und einer Dicke von 10 mm aus St 60, sollte auf der Seite der Schneidkante eine 30 mm breite Schicht mit einer Dicke von 0,5 mm erhalten.

Als Beschichtungswerkstoff wurde eine Co-Hartlegierung auf der Basis Co W Cr C verwendet. Der pulverförmige Werkstoff wurde als Paste mit einem Harzbinder auf die durch Strahlen vorbereitete Fläche aufgebracht. Der Anteil des Harzbinders an Feststoffen war < 5 %. Die Paste wurde mit einer Vorrichtung auf die zu beschichtende Oberfläche aufgebracht und ausgehärtet. Die Gesamtstärke der ausgehärteten Schicht betrug 0,8 mm.

Nach dem Aushärten des Binders wurde die so aufgebrachte Schicht mit einem Laserstrahl, der auf 2 mm Durchmesser entfocussiert war, eingeschmolzen. Die Leistung des Lasers beim Einschmelzen betrug 2,5 kW. Die Vorschubgeschwindigkeit mit der das Schlagmesser durch den Strahl bewegt wurde, betrug 21 m/h, die Ueberlappung der Schmelzzone 50 %.

Nach dem Einschmelzen wurden die Oberflächen durch Schleifen nachbearbeitet, die Kante des Schlagmessers wurde in einem Winkel von 45° angeschrägt.

Beim Einsatz des Schlagmessers wurde die fünffache Standzeit gegenüber einem nicht beschichteten Messer festgestellt. Zudem gestattet die selbstschärfende Eigenschaft des so hergestellten Schlagmessers die Einsparung sonst erforderlicher Nachschleifzeiten.

## Patentansprüche

1. Verfahren zum Herstellen einer selbstschärfenden Schneid- oder Messerkante durch Beschichten eines metallischen Grundwerkstoffes mit einer Hartlegierungsschicht auf der Basis eines oder mehrerer Elemente der Gruppe 8, Periode 4, des Periodensystems von mehr als 0,5 mm Dicke, die nach dem Aufbringen auf den Grundwerkstoff mittels eines Hochenergiestrahles eingeschmolzen und dessen Eindringtiefe so gewählt wird, daß die Überlappung der Schmelzzone mehr als 20 % der Schichtdicke beträgt, wobei die Härte des Grundwerkstoffes wesentlich niedriger liegt als die Härte der Schicht.

2. Verfahren nach Anspruch 1, dadurch gekennzeichnet, daß in den Schichtwerkstoff Hartstoffe wie Karbide, Boride, Silicide und/oder Nitride eingelagert werden.

3. Verfahren nach Anspruch 1 oder 2, dadurch gekennzeichnet, daß der Hartstoffanteil im Bezug auf die Matrixhartlegierung zwischen 5 und 95 Gew.-% liegt, wobei gegebenenfalls die Korngröße der eingelagerten Hartstoffe unter 200 µm, vorzugsweise unter 150 µm, liegt.

4. Verfahren nach Anspruch 1 oder 2, dadurch gekennzeichnet, daß der Schichtwerkstoff eine Nickel-Hartlegierung, oder eine Kobalt-Hartlegierung oder eine Eisen-Hartlegierung ist.

5. Verfahren nach einem der Ansprüche 1 bis 4, gekennzeichnet durch eine Co Cr W C - Hartlegierung als Schichtwerkstoff.

6. Verfahren nach einem der Ansprüche 1 bis 4, gekennzeichnet durch eine Ni Cr B Si-Hartlegierung als Schichtwerkstoff, wobei gegebenenfalls etwa 50 Gew.-% an Wolframschmelzkarbid zugesetzt werden.

7. Verfahren nach wenigstens einem der Ansprüche 1 bis 6, dadurch gekennzeichnet, daß der Schichtwerkstoff durch ein thermisches Spritzverfahren aufgebracht wird.

8. Verfahren nach wenigstens einem der Ansprüche 1 bis 6, dadurch gekennzeichnet, daß der Schichtwerkstoff als Paste aufgebracht wird, die zumindest aus der Hartlegierung und einem Binder besteht, wobei in letzterem Falle als Binder für den Schichtwerkstoff ein aushärtbarer Harzbinder eingesetzt und vor der Nachbehandlung mit dem Hochenergiestrahl ausgehärtet werden kann.

9. Verfahren nach wenigstens einem der Ansprüche 1 bis 7, dadurch gekennzeichnet, daß der Schichtwerkstoff als Pulver mit einer Pulverfördereinrichtung direkt in den Hochenergiestrahl eingebracht wird, und/oder, daß die Dicke der Schicht des aufgebrachten Schichtwerkstoffes unter 2 mm, bevorzugt unter 1,0 mm, liegt.

10. Verfahren nach wenigstens einem der Ansprüche 1 bis 9, gekennzeichnet durch einen Grundwerkstoff aus einer Eisen-Basislegierung, wobei gegebenenfalls eine aushärtbare Eisen-Basislegierung vorgesehen ist, die bevorzugt korrosionsbeständig ist.

11. Verfahren nach wenigstens einem der Ansprüche 1 bis 9, gekennzeichnet durch einen Grundwerkstoff aus einer korrosionsbeständigen Nickel-Basislegierung.

12. Verfahren nach wenigstens einem der Ansprüche 1 bis 11, dadurch gekennzeichnet, daß die Schicht in eine in den Grundwerkstoff eingefügte Aussparung eingebracht wird.

13. Verfahren nach wenigstens einem der Ansprüche 1 bis 12, dadurch gekennzeichnet, daß zum Einschmelzen und Verdichten des aufgebrachten Schichtwerkstoffes ein Laserstrahl verwendet wird.

14. Verfahren nach wenigstens einem der Ansprüche 1 bis 13, dadurch gekennzeichnet, daß die Eindringtiefe des Hochenergiestrahles größer ist als die Dicke der aufgebrachten Schicht.

15. Verfahren nach Anspruch 14, gekennzeichnet durch eine Überlappung der Schmelzzone von etwa 20 bis 60 %.

## Claims

1. Process for manufacturing a self-sharpening cutting or knife edge by coating a metal base material with a hard alloy layer based on one or more elements from group 8, period 4, of the periodic table to a thickness of more than 0.5 mm, which, after being applied to the base material, is melted by means of a high-energy beam, and the depth of penetration of which is selected so that the overlap of the melting zone is more than 20 % of the layer thickness, the hardness of the base material being substantially lower than the hardness of the layer.

2. Process according to claim 1, characterised in that hard materials such as carbides, borides silicides and/or nitrides are embedded in the layer material.

3. Process according to claim 1 or claim 2, characterised in that the hard material content is between 5 and 95 % by weight in relation to the matrix hard alloy, the grain size of the embedded hard materials optionally being less than 200 µm, preferably less than 150 µm.

4. Process according to claim 1 or claim 2, characterised in that the layer material is a nickel hard alloy or a cobalt hard alloy or an iron hard alloy.

5. Process according to one of claims 1 to 4, characterised by a Co-Cr-W-C hard alloy as the layer material.

6. Process according to one of claims 1 to 4, characterised by an Ni-Cr-B-Si hard alloy as the layer material, approximately 50 % by weight of tungsten carbide optionally being added.

7. Process according to at least one of claims 1 to 6, characterised in that the layer material is applied by thermal spraying.

8. Process according to at least one of claims 1 to 6, characterised in that the layer material is applied as a paste consisting at least of the hard alloy and a binder, wherein in the latter case a hardenable resin binder is used as the binder for the layer material and can be hardened prior to subsequent treatment with the high-energy beam.

9. Process according to at least one of claims 1 to 7, characterised in that the layer material is introduced directly into the high-energy beam as a powder by a powder conveyor, and/or that the thickness of the layer of the layer material applied is less than 2 mm, preferably less than 1.0 mm.

10. Process according to at least one of claims 1 to 9, characterised by a base material consisting of an alloy based on iron, a hardenable alloy based on iron which is preferably corrosion-resistant optionally being provided.

11. Process according to at least one of claims 1 to 9, characterised by a base material consisting of a corrosion-resistant alloy based on nickel.

12. Process according to at least one of claims 1 to 11, characterised in that the layer is introduced into a recess inserted in the base material.

13. Process according to at least one of claims 1 to 12, characterised in that a laser beam is used to melt and compact the layer material applied.

14. Process according to at least one of claims 1 to 13, characterised in that the depth of penetration of the high-energy beam is greater than the thickness of the layer applied.

15. Process according to claim 14, characterised by an overlap of the melting zone of approximately 20 to 60 %.

## Revendications

1. Procédé pour fabriquer une arête coupante ou une arête de couteau s'aiguisant automatiquement, en déposant, sur un matériau métallique servant d'assise, une couche d'un alliage dur à base d'un ou de plusieurs éléments du groupe 8, période 4, du système périodique, de plus de 0,5 mm d'épaisseur, laquelle couche, après dépôt sur le matériau servant d'assise, est fondue au moyen d'un rayonnement à haute énergie, sa profondeur de pénétration étant choisie de telle manière que le chevauchement de la zone de fusion est supérieur à 20% de l'épaisseur de la couche, la dureté du matériau servant d'assise étant sensiblement inférieure à la dureté de la couche.

2. Procédé conforme à la revendication 1, caractérisé en ce que, dans le matériau de la couche, sont introduites des substances dures comme des carbures, des borures, des siliciures et/ou des nitrures.

3. Procédé conforme à la revendication 1 ou 2, caractérisé en ce que le pourcentage de substance dure par rapport à l'alliage dur formant matrice est compris entre 5 et 95% en poids, la taille des grains de la substance dure introduite étant, le cas échéant, inférieure à 200 µm, et de préférence inférieure à 150 µm.

4. Procédé conforme à la revendication 1 ou 2, caractérisé en ce que le matériau de la couche est un alliage dur de nickel, ou un alliage dur de cobalt ou un alliage dur de fer.

5. Procédé conforme à l'une des revendications 1 à 4, caractérisé par un alliage dur de Co Cr W C en tant que matériau de la couche.

6. Procédé conforme à l'une des revendications 1 à 4, caractérisé par un alliage dur de Ni Cr B Si en tant que matériau de la couche, dans lequel on ajoute le cas échéant environ 50% en poids de carbure de tungstène fondu.

7. Procédé conforme à l'une au moins des revendications 1 à 6, caractérisé en ce que le matériau de la couche est déposé par un procédé de pulvérisation à chaud.

8. Procédé conforme à l'une au moins des revendications 1 à 6, caractérisé en ce que le matériau de la couche est déposé sous forme d'une pâte, qui se compose au moins de l'alliage dur et d'un liant, et en ce que dans ce dernier cas, en tant que liant pour le matériau de la couche, une résine liante durcissable peut être utilisée et durcie par le rayonnement à haute énergie avant le traitement ultérieur.

9. Procédé selon l'une au moins des revendications 1 à 7, caractérisé en ce que le matériau de la couche est introduit sous forme de poudre, par un dispositif d'alimentation en poudre, directement dans le rayonnement à haute énergie, et/ou en ce que l'épaisseur de la couche de matériau déposée est inférieure à 2 mm, et de préférence inférieure à 1,0 mm.

10. Procédé selon l'une au moins des revendications 1 à 9, caractérisé par un matériau servant d'assise composé d'un alliage support à base de fer, éventuellement prévu sous forme d'un alliage support à base de fer apte à être trempé, qui est de préférence résistant à la corrosion.

11. Procédé selon l'une au moins des revendications 1 à 9, caractérisé par un matériau servant d'assise composé d'un alliage support à base de nickel résistant à la corrosion.

12. Procédé selon l'une au moins des revendications 1 à 11, caractérisé en ce que la couche est déposée dans un évidement pratiqué dans le matériau servant d'assise.

13. Procédé selon l'une au moins des revendications 1 à 12, caractérisé en ce que l'on utilise un rayonnement laser pour fondre et comprimer la couche de matériau déposée.

14. Procédé selon l'une au moins des revendications 1 à 13, caractérisé en ce que la profondeur de pénétration du rayonnement à haute énergie est supérieure à l'épaisseur de la couche déposée.

15. Procédé conforme à la revendication 14, caractérisé par un chevauchement de la zone de fusion compris entre environ 20% et 60%.
